# EUROPEAN PATENT SPECIFICATION

(11) **EP 3 345 753 B1**
(45) Date of publication and mention of the grant of the patent: **05.06.2019**
(21) Application number: 15903306.7
(22) Date of filing: 18.09.2015
(51) Int. Cl.: B29D 12/02, B29C 69/00, G02C 5/00

(54) **METHOD FOR FABRICATING MULTI-COLOR CELLULOSE ACETATE SPECTACLE FRAME**
VERFAHREN ZUR HERSTELLUNG EINER MEHRFARBIGEN CELLULOSEACETAT-BRILLENFASSUNG
PROCÉDÉ DE FABRICATION DE MONTURE DE LUNETTES EN ACÉTATE DE CELLULOSE MULTICOLORE

(30) Priority: 07.09.2015 CN 201510558145
(43) Date of publication of application: 11.07.2018
(73) Proprietor: Wang, Daomin, Shenzhen, Guangdong 518052 (CN)
(72) Inventor: Wang, Daomin, Shenzhen, Guangdong 518052 (CN)
(74) Representative: Spittle, Mark Charles
(86) International application number: PCT/CN2015/000647
(87) International publication number: WO 2017/041199

(56) References cited:
- CN-A- 102 211 412
- CN-A- 102 692 727
- CN-A- 104 407 447
- CN-A- 104 441 713
- DE-B- 1 186 606
- FR-A1- 2 637 532
- JP-A- 2000 292 753
- US-A- 3 288 666
- US-A- 4 013 747
- US-A1- 2007 254 140

## Description

### FIELD OF THE INVENTION

The present invention relates to the technical field of spectacle frame fabrication, and more particularly, to a method for fabricating a multi-color cellulose acetate spectacle frame.

### BACKGROUND OF THE INVENTION

Common spectacle frames in the market comprise metal spectacle frames and plastic spectacle frames. The metal spectacle frames are rigid and durable, but poor in comfort. Tail ends of legs of the metal spectacle frame are usually sleeved with plastic to protect ear bones. Thus, the metal spectacle frame is relatively heavier, and is relatively poorer in corrosion resistance. The plastic spectacle frame is light and highly corrosion-resistant, and thus is competitive in the market and favored by people.

With the development of society, young people are eager to pursue individualities, so multi-color spectacles are popular. However, such the multi-color spectacle is only limited to layered distribution of colors of sheets of the spectacle, and a frame of the multi-color spectacle cannot show a colorful effect when seen from the front. JP 2000 292753 discloses a method for fabricating a multi-color acetate spectacle frame, the method comprising the following steps: S10, providing a three-color cellulose acetate sheet constructed of multiple layers in its thickness direction, each layer having a color; S20, cutting the three-color cellulose acetate sheet S40, placing the three-color cellulose acetate sheet in a coarse pressing die of a press for pressing, so as to enable a portion of the three-color cellulose acetate sheet to move a distance equal to the thickness of a surface color layer of the three-color cellulose acetate sheet; S50, grinding off a surface layer of the moved portion and S90, mounting spectacle frame fittings on the formed spectacle rim.

### SUMMARY OF THE INVENTION

An object of the present invention is to provide a method for fabricating a multi-color cellulose acetate spectacle frame. The spectacle frame can show a colorful effect by virtue of controllable shift of a multi-color cellulose acetate sheet under a high pressure.

A method for fabricating a multi-color cellulose acetate spectacle frame comprises the following steps: S10, providing a three-color cellulose acetate sheet constructed of multiple layers in its thickness direction, each layer having a color; S20, cutting the three-color cellulose acetate sheet by a CNC engraving and cutting machine; S30, placing the engraved three-color cellulose acetate sheet in an oven for baking; S40, placing the baked three-color cellulose acetate sheet in a coarse pressing die of a hydraulic press for pressing, so as to enable a portion of the three-color cellulose acetate sheet to move a distance equal to the thickness of a surface color layer of the three-color cellulose acetate sheet; S50, grinding off a surface layer of the moved portion by a water grinder; S60, placing the processed three-color cellulose acetate sheet in the oven for baking; S70, placing the baked three-color cellulose acetate sheet in a precision pressing die of the hydraulic press for pressing, so as to enable the moved portion of the three-color cellulose acetate sheet to move a certain distance; S80, cutting out inner rings by the CNC engraving and cutting machine to form a spectacle rim; and S90, mounting spectacle frame fittings on the formed spectacle rim.

Preferably, the movement distance in step S70 is less than the thickness of a middle layer of the three-color cellulose acetate sheet.

Preferably, in steps S30 and S60, the temperature in the oven is set to 220-280 °C, and the baking time is 0.5-1.5 minutes.

Preferably, in step S40, after the three-color cellulose acetate sheet is placed in the coarse pressing die of the hydraulic press and is pressed, the shape of the spectacle rim is formed.

In the method for fabricating the multi-color cellulose acetate spectacle frame, the existing multi-color cellulose acetate sheet is used as a raw material to be heated and pressed, so that a partial structure of the multi-color cellulose acetate sheet is shifted to highlight the color of the middle layer of the three-color cellulose acetate sheet on the surface of the spectacle frame, thereby achieving a colorful effect of the spectacle frame.

### BRIEF DESCRIPTION OF THE DRAWINGS

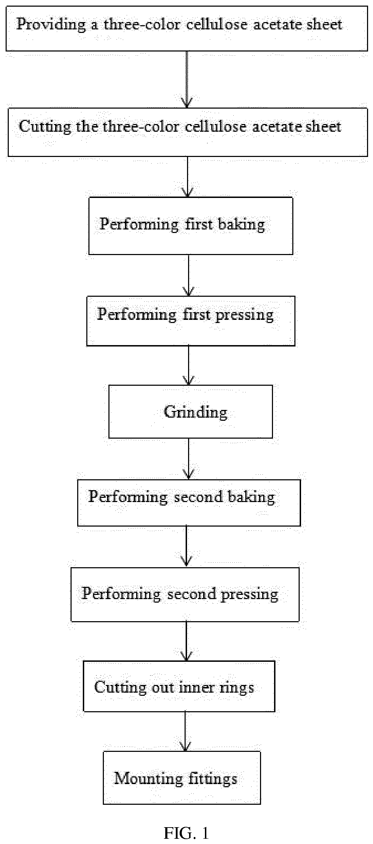

Fig. 1 is a schematic flow chart of a method for fabricating a multi-color cellulose acetate spectacle frame according to the present invention.

### DETAILED DESCRIPTION OF THE EMBODIMENTS

The present invention will be further described in detail below in combination with the accompanying drawings and the specific embodiments.

Referring to Fig. 1, Fig. 1 shows a method for fabricating a multi-color cellulose acetate spectacle frame. The method comprises the following steps.

In step S10, a three-color cellulose acetate sheet constructed of multiple layers in its thickness direction is provided, each layer having a color.

In step S20, the three-color cellulose acetate sheet is cut by a CNC engraving and cutting machine. That is, an outer ring of a spectacle rim is formed through cutting.

In step S30, first baking is performed: the cut three-color cellulose acetate sheet is placed in an oven for baking with the set temperate in the oven of 220-280 °C and the baking time of 0.5-1.5 minutes, so that the three-color cellulose acetate sheet is softened.

In step S40, first pressing is performed: the softened three-color cellulose acetate sheet is placed in a coarse pressing die of a hydraulic press for pressing, so as to enable a portion of the three-color cellulose acetate sheet to move a distance equal to the thickness of a surface color layer of the three-color cellulose acetate sheet.

In step S50, grinding is performed: a surface layer of the moved portion is ground off by a water grinder, so that the color of a middle layer is highlighted after the surface layer is removed.

In step S60, second baking is performed: the processed three-color cellulose acetate sheet is placed in the oven for baking with the set temperate in the oven of 220-280 °C and the baking time of 0.5-1.5 minutes, so that the three-color cellulose acetate sheet is softened.

In step S70, second pressing is performed: the baked three-color cellulose acetate sheet is placed in a precision pressing die of the hydraulic press, so as to enable the moved portion of the three-color cellulose acetate sheet to move a certain distance. That is, the remaining two layers move outwards by a certain distance. The moved distance is less than the thickness of the middle layer of the three-color cellulose acetate sheet.

In step S80, inner rings are cut out by the CNC engraving and cutting machine to form the spectacle rim.

In step S90, spectacle frame fittings, such as legs, are mounted on the formed spectacle rim to form the spectacle frame.

The existing multi-color cellulose acetate sheet is used as a raw material to be heated and pressed, so that a partial structure of the multi-color cellulose acetate sheet is shifted to highlight the color of the middle layer of the three-color cellulose acetate sheet on the surface of the spectacle frame, thereby achieving a colorful effect of the spectacle frame, and overcoming the structure limitation of the multi-color cellulose acetate sheet.

The foregoing is a further detailed description of the present invention in combination with the specific embodiments, and it cannot be considered that the specific implementations of the present invention are limited to these descriptions. For those skilled in the art, some simple deductions or substitutions can be made without departing from the concept of the present invention, as it is defined in the claims.

## Claims

1. A method for fabricating a multi-color cellulose acetate spectacle frame, the method comprising the following steps:
S10, providing a three-color cellulose acetate sheet constructed of multiple layers in its thickness direction, each layer having a color;
S20, cutting the three-color cellulose acetate sheet by a CNC engraving and cutting machine;
S30, placing the engraved three-color cellulose acetate sheet in an oven for baking;
S40, placing the baked three-color cellulose acetate sheet in a coarse pressing die of a hydraulic press for pressing, so as to enable a portion of the three-color cellulose acetate sheet to move a distance equal to the thickness of a surface color layer of the three-color cellulose acetate sheet;
S50, grinding off a surface layer of the moved portion by a water grinder;
S60, placing the processed three-color cellulose acetate sheet in the oven for baking;
S70, placing the baked three-color cellulose acetate sheet in a precision pressing die of the hydraulic press for pressing, so as to enable the moved portion to move a certain distance;
S80, cutting out inner rings by the CNC engraving and cutting machine to form a spectacle rim; and
S90, mounting spectacle frame fittings on the formed spectacle rim.

2. The method for fabricating the multi-color cellulose acetate spectacle frame of claim 1, wherein the movement distance in step S70 is less than the thickness of a middle layer of the three-color cellulose acetate sheet.

3. The method for fabricating the multi-color cellulose acetate spectacle frame of claim 2, wherein in steps S30 and S60, the temperature in the oven is set to 220-280 °C, and the baking time is set to 0.5-1.5 minutes.

4. The method for fabricating the multi-color cellulose acetate spectacle frame of any of claims 1-3, wherein in step S40, after the three-color cellulose acetate sheet is placed in the coarse pressing die of the hydraulic press and is pressed, the shape of the spectacle rim is formed.

## Patentansprüche

1. Verfahren zum Herstellen einer mehrfarbigen Celluloseacetat-Brillenfassung, wobei das Verfahren die folgenden Schritte umfasst:
S10, Bereitstellen einer dreifarbigen Celluloseacetatfolie, die aus mehreren Schichten in ihrer Dickenrichtung aufgebaut ist, wobei jede Schicht eine Farbe aufweist;
S20, Schneiden der dreifarbigen Celluloseacetatfolie mit einer CNC-Gravier- und - Schneidemaschine;
S30, Platzieren der gravierten dreifarbigen Celluloseacetatfolie in einen Ofen zum Backen;
S40, Platzieren der gebackenen dreifarbigen Celluloseacetatfolie in ein grobes Pressformwerkzeug einer hydraulischen Presse zum Pressen, um zu ermöglichen, dass sich ein Abschnitt der dreifarbigen Celluloseacetatfolie um eine Entfernung gleich der Dicke einer Oberflächenfarbschicht der dreifarbigen Celluloseacetatfolie bewegt;
S50, Abschleifen einer Oberflächenschicht des bewegten Abschnitts durch einen Wasserschleifer;
S60, Platzieren der verarbeiteten dreifarbigen Celluloseacetatfolie in den Ofen zum Backen;
S70, Platzieren der gebackenen dreifarbigen Celluloseacetatfolie in ein Präzisionspressformwerkzeug der hydraulischen Presse zum Pressen, um zu ermöglichen, dass sich der bewegte Abschnitt um eine bestimmte Entfernung bewegt;
S80, Ausschneiden von Innenringen mit der CNC-Gravier- und -Schneidemaschine, um einen Brillenrand auszubilden; und
S90, Befestigen von Brillenfassungsformstücken auf dem ausgebildeten Brillenrand.

2. Verfahren zum Herstellen der mehrfarbigen Celluloseacetat-Brillenfassung nach Anspruch 1, wobei die Bewegungsentfernung in Schritt S70 kleiner als die Dicke einer Mittelschicht der dreifarbigen Celluloseacetatfolie ist.

3. Verfahren zum Herstellen der mehrfarbigen Celluloseacetat-Brillenfassung nach Anspruch 2, wobei in Schritt S30 und Schritt S60 die Temperatur in dem Ofen auf 220-280 °C eingestellt ist und die Backdauer auf 0,5-1,5 Minuten eingestellt ist.

4. Verfahren zum Herstellen der mehrfarbigen Celluloseacetat-Brillenfassung nach einem der Ansprüche 1-3, wobei in Schritt S40, nachdem die dreifarbige Celluloseacetatfolie in das grobe Pressformwerkzeug der hydraulischen Presse platziert und gepresst worden ist, die Form des Brillenrandes ausgebildet wird.

## Revendications

1. Procédé de fabrication d'une monture de lunettes en acétate de cellulose multicolore, le procédé comprenant les étapes suivantes :
S10 : fourniture d'une feuille d'acétate de cellulose à trois couleurs constituée de plusieurs couches dans la direction de son épaisseur, chaque couche présentant une couleur ;
S20 : découpe de la feuille d'acétate de cellulose à trois couleurs à l'aide d'une machine de gravure et de découpe CNC ;
S30 : disposition de la feuille d'acétate de cellulose à trois couleurs gravée dans un four pour la cuisson ;
S40 : disposition de la feuille d'acétate de cellulose à trois couleurs cuite dans une matrice de pressage grossière d'une presse hydraulique, afin de permettre le déplacement d'une partie de la feuille d'acétate de cellulose à trois couleurs sur une distance égale à l'épaisseur d'une couche colorée superficielle de la feuille d'acétate de cellulose à trois couleurs ;
S50 : broyage d'une couche superficielle de la partie déplacée par un broyeur à eau ;
S60 : disposition de la feuille d'acétate de cellulose à trois couleurs traitée dans le four pour la cuisson ;
S70 : disposition de la feuille d'acétate de cellulose à trois couleurs cuite dans une matrice de pressage de précision de la presse hydraulique pour presser, de manière à permettre le déplacement de la partie déplacée sur une certaine distance ;
S80 : découpage des bagues intérieures à l'aide de la machine de gravure et de découpe CNC de façon à former une armature de lunettes ; et
S90 : montage d'accessoires de monture de lunettes sur l'armature de lunettes réalisée.

2. Procédé de fabrication de la monture de lunettes en acétate de cellulose multicolore selon la revendication 1, dans lequel la distance de déplacement à l'étape S70 est inférieure à l'épaisseur d'une couche intermédiaire de la feuille d'acétate de cellulose à trois couleurs.

3. Procédé de fabrication de la monture de lunettes en acétate de cellulose multicolore selon la revendication 2, dans lequel dans les étapes S30 et S60, la température dans le four est réglée à 220 à 280 °C, et le temps de cuisson est réglé à 0,5 à 1,5 minute.

4. Procédé de fabrication de la monture de lunettes en acétate de cellulose multicolore selon l'une quelconque des revendications 1 à 3, dans lequel, à l'étape S40, après la disposition de la feuille d'acétate de cellulose à trois couleurs dans la matrice de pressage grossière de la presse hydraulique et son pressage, la forme de l'armature de lunettes est obtenue.
